# EUROPEAN PATENT APPLICATION

(11) **EP 1 104 741 A1**
(43) Date of publication of application: **06.06.2001**
(21) Application number: 00500254.8
(22) Date of filing: 29.11.2000
(51) Int. Cl.: B64C 39/08, B64C 39/06

(54) **Aircraft lift arrangement**

(30) Priority: 01.12.1999 ES 9902646
(71) Applicant: Munoz Saiz, Manuel, E-28017 Madrid (ES)
(72) Inventor: Munoz Saiz, Manuel, E-28017 Madrid (ES)

(57) **Abstract**

An aircraft lift arrangement that consists of fine fins (2) which are parallel among themselves and slightly curved, arranged attached along the sides of the aircraft fuselage (3), beginning at the front and running downward toward the rear, with a positive angle of attack and with the additional of small thin wings to provide lateral stability and to carry the engines, flaps and ailerons.

## Description

### Field of the Invention:

In aircraft lift systems.

### Description of the Related Art:

At present, wings used on aircraft need extremely high consistency, particularly, because of the large span, they are heavy, voluminous and general low-efficiency, proving complicated and more costly. They are also highly resistant to advance and greatly affected by turbulence or gusting. That is all reduced in part with this invention.

### Description of the invention:

The aircraft lift device of the invention consists of fine fins which are parallel among themselves and slightly curved, arranged attached along the sides of the aircraft fuselage, beginning at the front and running downward toward the rear, with a positive angle of attack and with the additional of small thin wings to provide lateral stability and to carry the engines, flaps and ailerons.

Said small wings, installed separately or on any of the lift fins, may be at the front, in the centre or at the rear: in the latter case, they can carry the stabilizers and elevators.

The fins can be arranged along the largest part of the fuselage side: they comprise a single element.

The fuselage may be oval in cross-section, with flattened sides, also to reduce side wind effect.

The centre of the fins may be slightly curved, with a positive angle of attack, the front or leading edge is horizontal or with a sligtly negative angle and the rear or trailing edge roughly horizontal. Short fins can also be used, fitted in several groups.

The fin transverse cross-section may be parallel to the aircraft's transverse axis.

The fin transverse cross-section can form an angle smaller than 180º with the transverse axis of the aircraft, similar to aircraft dihedral angle. The outer edge of the fins may have a plate at a tangent to the surface of the aircraft fuselage to increase performance.

The outer edges of adjacent fins may be joined by plates to give a flattened tube shape.

Operation: the air flow arrives at the edge of attack of the fins which, being curved downward, direct that flow down to where it leaves at the trailing edge. The downward displacement of the flow causes the fins and thus the aircraft to react upward, i.e. lift.

Adventages: they do not need high consistency, they are light, small, high-performing, simple and economical. They offer little forward resistance and are less affected by tubulence and gusting.

### BRIEF DESCRIPTION OF THE DRAWIGS

Figure 1 shows a side, squematic view of an aircraft with the arrangement of the invention.

Figure 2 to 4 show side, squematic views of different aircrafts and variants with the arrangement of the invention.

Figure 5 to 10 show various transverse cross-section of fuselages with different types of fins and small wings.

### DETAILED DESCRPTION OF THE INVENTION

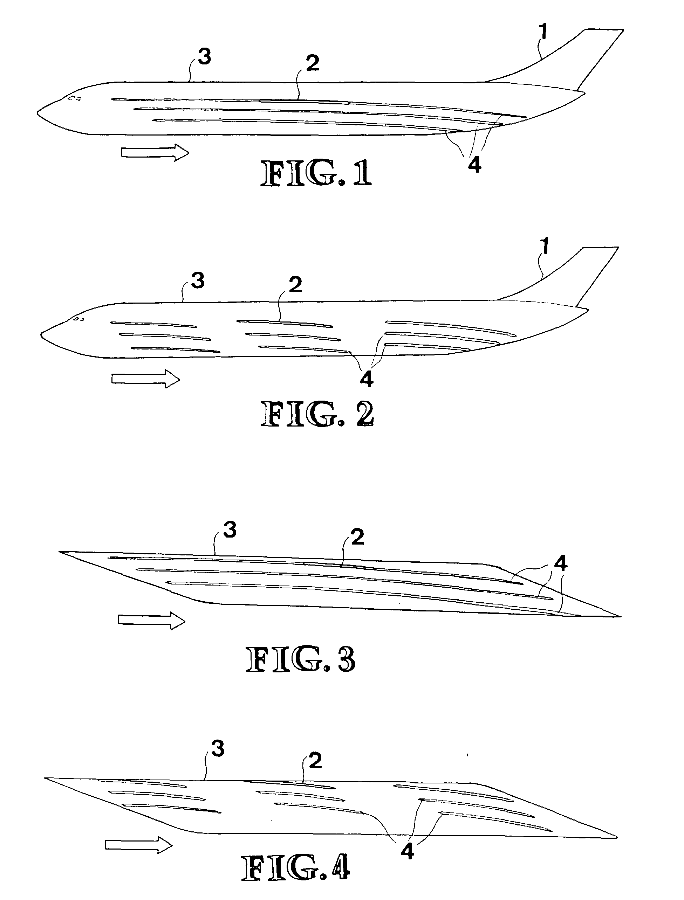

Figure 1 consists of the tail 1, the fine, parallel and slightly curved fins 4, arranged attached along the sides of the aircraft fuselage 3, beginning at the front and running downward toward the rear, with a positive angle of attack and with the additional of small thin wings 2 to provide lateral stability and to carry the engines, flaps and ailerons.

Figure 2 consists of the tail 1, the small wing 2, the fuselage 3 and the short fins 4, fitted in several grups.

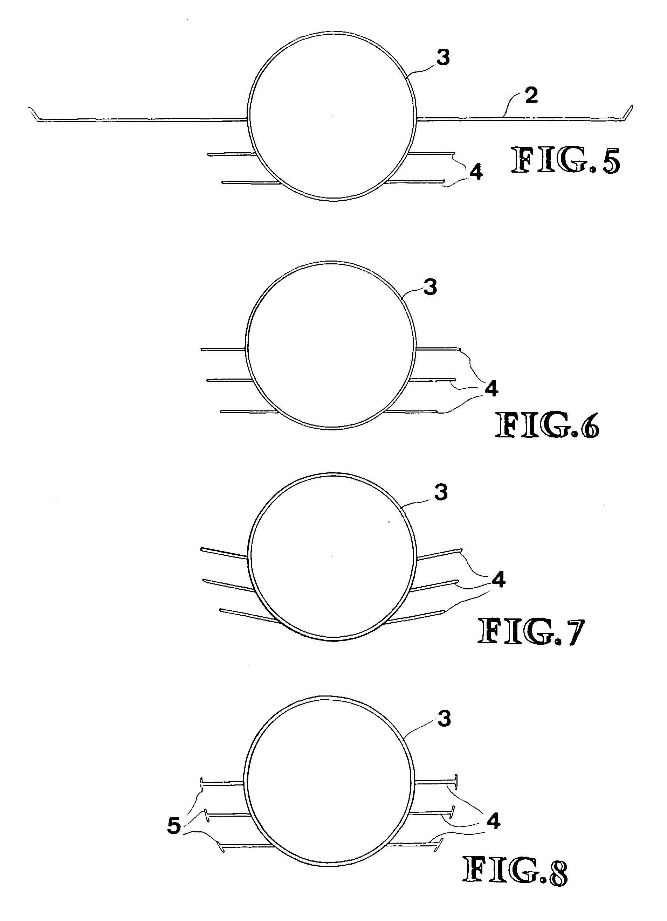

Figure 3 consists of the small wing 2, the modified fuselage 3 and the fins 4.

Figure 4 consists of the small wing 2, the modified fuselage 3 and the short fins 4, fitted in several grups.

Figure 5 consists of the small wing 2, the fuselage 3 and the fins 4.

Figure 6 consists of the fuselage 3 and the horizontal transverse cross-section fins 4.

Figure 7 consists of the fuselage 3 and the laterally inclined fins 4.

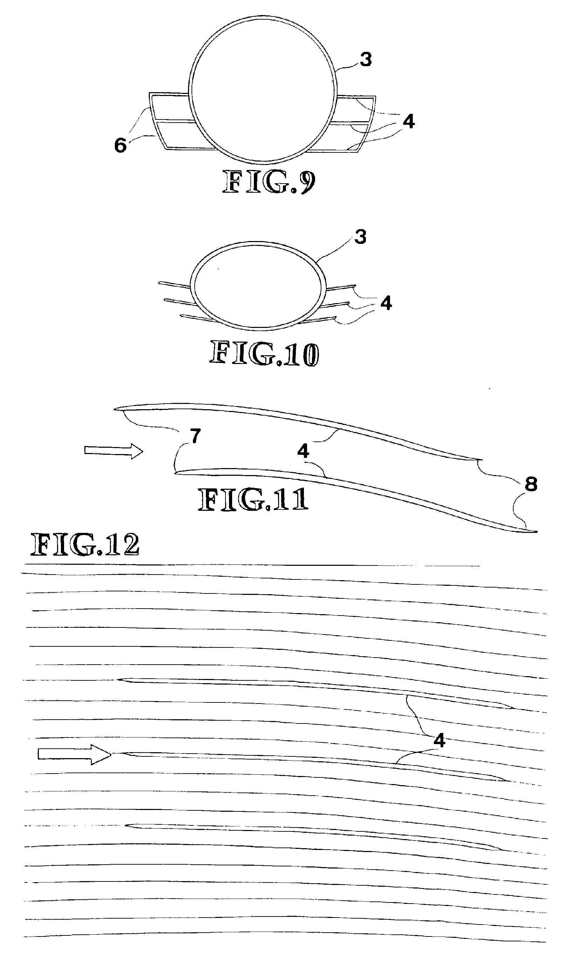

Figure 8 consists of the fuselage 3, the fins 4 and the plates 5 at their outer edges.

Figure 9 consists of the fuselage 3, with the outer edges of adjacent fins 4 joined by plates 6 to give a flattened tube shape.

Figure 10 consists of the oval cross-section fuselage 3 and the fins 4.

Figure 11 shows the centre of the fin 4 slightly curved, with a positive angle of attack, the front or leading edge 7 is horizontal or with a sligtly negative angle and the rear or trailing edge 8 roughly horizontal.

Figure 12 shows the air flow arriving at the edge of attack of the fins 4 which, being curved downward, direct that flow down to where it leaves at the trailing edge.

The arrows indicate the airflow with reference to the aircraft or fins.

## Claims

1. An aircraft lift arrangement that consists of fine fins which are parallel among themselves and slightly curved, arranged attached along the sides of the aircraft fuselage, beginning at the front and running downward toward the rear, with a positive angle of attack and with the additional of small thin wings to provide lateral stability and to carry the engines, flaps and ailerons.

2. An aircraft lift arrangement according to claim 1, wherein the small wings, are installed at the rear and they carry the stabilizers and elevators.

3. An aircraft lift arrangement according to claim 1, wherein the fins are arranged along the largest part of the fuselage side.: they comprise a single element.

4. An aircraft lift arrangement according to claim 1, wherein the fuselage is oval in cross-section, with flattened sides.

5. An aircraft lift arrangement according to claim 1, wherein the centre of the fins are slightly curved, with a positive angle of attack, the front or leading edge is horizontal or with a sligtly negative angle and the rear or trailing edge roughly horizontal.

6. An aircraft lift arrangement according to claim 1, wherein short fins are used, fitted in several groups.

7. An aircraft lift arrangement according to claim 1, wherein the fin transverse cross-section is parallel to the aircraft's transverse axis.

8. An aircraft lift arrangement according to claim 1, wherein the fin transverse cross-section of the fins form an acute angle with the transvere axis of the aircraft, similar to aircraft wing dihedral angle.

9. An aircraft lift arrangement according to claim 1, wherein the outer edge of the fins have a plate at a tangent to the surface of the aircraft fuselage.

10. An aircraft lift arrangement according to claim 1, wherein the outer edges of adjacent fins are joined by plates to give a flattened tube shape.
